# EUROPEAN PATENT SPECIFICATION

(11) **EP 4 711 831 B1**
(45) Date of publication and mention of the grant of the patent: **04.11.2026**
(21) Application number: 24200415.8
(22) Date of filing: 13.09.2024
(51) Int. Cl.: G02B 7/02, G02B 13/00, G02B 13/14

(54) **LENS ARRANGEMENT AND IMAGING DEVICE**
LINSENANORDNUNG UND ABBILDUNGSVORRICHTUNG
AGENCEMENT DE LENTILLE ET DISPOSITIF D'IMAGERIE

(43) Date of publication of application: 18.03.2026
(73) Proprietor: OroraTech GmbH, 81669 München (DE)
(72) Inventor: Rio Fernandes Duscher, Diogo, 80336 München (DE)
(74) Representative: Michalski Hüttermann & Partner mbB

(56) References cited:
- CN-A- 102 980 657
- CN-A- 114 236 787
- CN-B- 106 772 959
- CN-B- 112 305 721
- CN-B- 112 882 210
- CN-U- 204 086 666

## Description

The invention relates to a lens arrangement for an imaging device, with at least three lenses, wherein a first lens comprises a first lens material, a second lens comprises a second lens material, a third lens comprises a third lens material, wherein the first lens, the second lens and the third lens are arranged serially on an optical axis, such that the second lens is arranged between the first lens and the third lens, and the first lens material, the second lens material and the third lens material each being transmissive to light in the mid-wave and long-wave infrared range. The invention further relates to the imaging device comprising the lens arrangement.

Traditional infrared imaging systems typically focus on either the mid-wave infrared (MWIR) spectrum, ranging from 3 to 5 µm, or the long-wave infrared (LWIR) spectrum, ranging from 8 to 13 µm. With the development of uncooled detectors capable of operating in both MWIR and LWIR spectral bands, so called dual-band detectors, there is an emerging potential to enhance infrared imaging capabilities by capturing a broader range of information from observed objects.

Despite these advancements, current infrared imaging solutions face several critical disadvantages. Achromatization, or the correction of chromatic aberration, remains a significant challenge, often resulting in suboptimal image quality across both spectral ranges. Furthermore, existing dual-band detectors are typically large and cumbersome, with slow optical systems that yield low signal-to-noise ratios (SNR). These systems also tend to lack thermal robustness, meaning their performance can degrade significantly with temperature variations.

To date, the primary solution to these issues has been the use of two independent infrared imaging devices, each equipped with a dedicated infrared lens design for its respective band. While this approach can achieve acceptable imaging performance, it introduces complexity, bulkiness, and higher costs. Additionally, some systems have attempted to address these issues by sacrificing resolution and SNR, which results in poorer image quality and less effective infrared imaging.

CN 112 882 210 B describes an infrared optical system, specifically disclosing an uncooled mid-to-long-wavelength broadband optical system. The system comprises an objective lens group, an imaging lens group, and a filter, arranged and fixedly connected sequentially from the object plane to the focal plane. The central axes of the objective lens group, imaging lens group, and filter are coaxial. Both the objective lens group and the imaging lens group have positive optical power. The objective lens group has a four-separated lens structure, consisting of a first positive lens, a first negative lens, a second positive lens, and a second negative lens sequentially from the object plane to the focal plane along the optical axis. The imaging lens group has a single-lens structure, consisting of a third positive lens. This optical system uses common infrared optical materials, effectively correcting aberrations associated with large apertures. It achieves confocal imaging in the mid-to-long-wavelength infrared broadband range, with a relative aperture of not less than F-number 1.1 and achieves calorimetry in the optical system. The optical system is easy to manufacture, has high imaging quality, and good stability.

CN 106 772 959 B describes an optical system with a large relative aperture that uses fewer materials, has a compact volume and structure, and can effectively eliminate both interband and intra-band chromatic aberrations in a dual-band system. The optical system comprises, in sequence from the object side to the focal plane, a front fixed lens group, an aperture stop, a middle fixed lens group, a rear fixed lens group, and a detector, all fixedly arranged; the central axes of the front fixed lens group, the aperture stop, the middle fixed lens group, and the rear fixed lens group are coaxial. The front fixed lens group has positive optical power and includes, coaxially arranged along the central axis from the object side toward the focal plane, a first positive lens, a first negative lens, and a second negative lens. The middle fixed lens group has negative optical power and includes, coaxially arranged along the central axis from the object side toward the focal plane, a second positive lens and a third negative lens. The aperture stop is fixedly positioned between the third negative lens and the second positive lens. The rear fixed lens group is formed by a third positive lens.

CN 112 305 721 B discloses an infrared dual-band telescope optical system comprising an objective group and an eyepiece group, wherein the objective group includes a first objective lens, a second objective lens, a third objective lens, a fourth objective lens, and a fifth objective lens, and the eyepiece group includes a first eyepiece and a second eyepiece. Light rays from an object at infinity pass successively through the objective group to form an image, which is then imaged again by the eyepiece group to infinity. The first objective lens is a biconvex positive lens, the second objective lens is a meniscus negative lens with its convex surface facing the image side, the third objective lens is a biconcave negative lens, the fourth objective lens is a biconcave negative lens, and the fifth objective lens is a meniscus positive lens with its convex surface facing the image side. The first eyepiece is a meniscus positive lens with its convex surface facing the object side, and the second eyepiece is a biconcave negative lens.

CN 114 236 787 A discloses an athermalization infrared lens with a focal length of 150 mm and an assembly method thereof. The lens comprises a lens barrel, and a first lens, a second lens, a third lens, a fourth lens and a fifth lens which are sequentially and coaxially arranged in the lens barrel from left to right in the light transmission direction. The first lens, the second lens and the third lens are meniscus lenses with convex surfaces facing the object side, the fourth lens is a meniscus lens with a convex surface facing the image side, and the fifth lens is a biconvex lens; the focal power of the first lens, the focal power of the second lens, the focal power of the third lens, the focal power of the fourth lens and the focal power of the fifth lens are positive, negative, positive, negative and positive respectively. The athermalization infrared lens can achieve a good optical passive athermalization effect through a reasonable focal power ratio and a reasonable lens material, has a good imaging effect within the wave band of 8-12 microns and the temperature range of-40 °C to 60 °C, and is particularly suitable for 640 by 512 and 15 microns type detectors.

CN 102 980 657 A discloses an optical system for infrared medium and long wave spectrum imaging. The optical system comprises a board band lens assembly and a multi-spectral filter assembly. The board band lens assembly is arranged in front of the multi-spectral filter assembly and used for optical wave focus imaging. The multi-spectral filter assembly is used for conducting filtering and cofocal plane compensation on optical wave used for focusing the broad band lens assembly. The optical system for imaging is large in hole diameter which can reach 0.9-1.1, and imaging quality approaches diffraction limit. The optical system adopts the broad band lens assembly and the multi-spectral filter assembly to achieve the multi-spectral imaging system. The system is simple in structure and easy to achieve. Cofocal plane compensation in narrow band imaging is well achieved by thickness change of a band-pass parallel plate filter, and complexity of broad band lens design is reduced. The optical system is used for non-refrigeration broadband infrared multi-spectral imaging and has wide application prospect in the fields of military industry and civil use.

It is therefore an object of the present invention to provide an improved lens arrangement and imaging device for dual-band infrared imaging.

According to the invention, this object is addressed by the subject matter of the independent claims. Preferred embodiments of the invention are described in the sub claims.

Thus, according to the invention a lens arrangement for an imaging device, with at least three lenses is provided, wherein a first lens is positive and comprises a first lens material, a second lens is negative and comprises a second lens material, a third lens is positive and comprises a third lens material, wherein the first lens, the second lens and the third lens are arranged serially on an optical axis, such that the second lens is arranged between the first lens and the third lens, the first lens material, the second lens material and the third lens material each being transmissive to light in the mid-wave and long-wave infrared range, and a refractive index of the first lens material and a refractive index of the second lens material are lower than a refractive index of the third lens material in that infrared range.

According to the invention, it is provided here that the lens arrangement comprises at least three lenses. These lenses are arranged in a specific order along an optical axis. The first lens, the second lens and the third lens are arranged in the same order with their respective centers on the optical axis. The first lens in the series is positive and comprises a first lens material. A positive lens is a lens that converges light rays, bringing them to a focus. The first lens material is chosen for its ability to transmit light in the mid-wave infrared range of 3 - 5 µm and long-wave infrared range of 8 - 13 µm. The lens arrangement further comprises a second lens that is negative and comprises a second lens material. A negative lens diverges light rays, spreading them apart. The second lens material, like the first, is also transmissive to light in the mid-wave and long-wave infrared range. The inclusion of a negative lens allows for the correction of chromatic aberration, a common issue where different wavelengths of light do not converge at the same point, resulting in a blurred image. The third lens in the arrangement is positive and comprises a third lens material. This third lens material is also transmissive to light in the mid-wave and long-wave infrared range and has a refractive index higher than that of the first and second lens materials in mid-wave and long-wave infrared range. The third lens serves as an ocular for a detector, meaning it is the lens closest to the detector and is crucial for focusing the final image.

One advantage of this lens arrangement according to the invention is that the combination of a positive first lens and a negative second lens forms an achromatic lens system. This means that chromatic aberrations are minimized, resulting in improved image quality across both the mid-wave and long-wave infrared ranges. The positioning of the second lens between the first lens and the third lens ensures that the optical system remains compact, maintaining a low physical volume while providing the necessary corrections for improved achromatization.

In general, the first to third lenses can have different refractive indices. According to a preferred embodiment of the invention, however, the first lens material, the second lens material and the third lens material comprise a refractive index of at least 2 in the infrared range. One advantage is that it allows for a more compact design because materials with higher refractive indices can bend light more effectively, reducing the need for longer focal lengths.

In principle, an aperture stops can be placed at different locations in the lens arrangement. According to a preferred embodiment of the invention, however, the lens arrangement comprises an aperture stop, wherein the aperture stop is arranged on the optical axis on the side of the first lens facing away from the second lens, wherein an aperture is formed centrally in the aperture stop, and a diameter of the aperture corresponds to at least a focal length of the lens arrangement, particularly corresponds to the focal length of the lens arrangement. The focal length is the inverse of the optical power of the lens arrangement. The aperture stop controls the amount of light entering the lens arrangement and ensures that infrared light rays are correctly aligned along the optical axis. One advantage of employing the aperture stop comprising the aperture with a diameter corresponding to the focal length is that it creates a fast-imaging device with an aperture number of f/1, providing a high signal-to-noise ratio. The present lens arrangement is designed such that a side of the first lens facing away from the second lens faces an object to be observed and/or a side of the aperture stop facing away from the first lens faces the object, such that infrared light from the object enters the lens arrangement through the aperture and/or the side respectively surface of the first lens facing the object. Furthermore, the positioning of the aperture stop improves the compactness of the arrangement. This lens arrangement is designed for very large objects, such as the earth, whereby the lens arrangement is formed in a satellite.

According to a further preferred embodiment of the invention, the refractive index of the second lens material is lower than the refractive index of the first lens material. This differential in refractive indices helps in correcting chromatic aberrations, resulting in improved image quality.

It is possible to form the first lens, the second lens and the third lens in different ways. According to a preferred embodiment of the invention, however, the first lens and the third lens are aspherical, and the second lens is spherical and convex-concave. Aspherical lenses have a more complex surface profile that reduces aberrations compared to spherical lenses. One advantage of this arrangement is that it enhances the overall image quality by minimizing distortions and improving achromatization. According to a further preferred embodiment of the invention, it is particularly preferred that the first lens is aspherical and concave-convex, and the third lens is aspherical and concave-convex. This shape configuration helps in further reducing optical aberrations and improving the focusing capability of the lens arrangement. The convex-concave lens is also known as a diverging meniscus lens. A front surface, i.e. a surface of the lens facing the object or where the light impinges has a radius that is larger than the radius of a back surface, i.e. a surface of the lens that faces the detector and thus away from the object. The concave-convex lens is also known as a converging meniscus lens. The front surface has a radius that is smaller than a radius of the back surface.

According to the invention, the first lens material has a thermo-optical coefficient of at most 70x10⁻⁶ 1/K, the second lens material has a thermo-optical coefficient of at most 450x10⁻⁶ 1/K, and the third lens material has a thermo-optical coefficient of at most 40x10⁻⁶ 1/K. The thermo-optical coefficient measures the change in the refractive index of a material with temperature. The thermo-optical coefficients here refer to coefficients at room temperature and a wavelength of 10,6 µm. Lower values indicate higher stability. One advantage of this arrangement is a passive athermalization, meaning the image quality remains optimal across a wide range of temperatures.

In principle, the first lens, the second lens and the third lens can be made of different materials. According to a preferred embodiment of the invention, however, the first lens material is zinc selenide, the second lens material is zinc selenide or multispectral zinc sulfide, and the third lens material is a chalcogenide. These materials are chosen for their excellent transmission properties in the infrared range, thermo-optical coefficients, refractive indices and manufacturability. In this context, according to an especially preferred embodiment of the invention, the chalcogenide consists of 40% arsenic and 60% selenium. This specific composition provides a high refractive index for improving achromatization. Excellent thermal stability is provided with zinc selenide as the first lens material. The first lens preferably closes the arrangement with the aperture stop, so that the arrangement as such is closed with a thermal shock resistant first lens and the aperture stop.

According to the invention, the lens arrangement includes a fourth lens comprising a fourth lens material, wherein the fourth lens is negative and arranged on the optical axis between the first lens and the second lens, and the fourth lens material is transmissive in the infrared range and has a refractive index higher than the refractive index of the third lens material in the infrared range. This additional lens further refines the optical performance by enhancing image quality and correcting aberrations.

In principle, the fourth lens can be made of different materials. According to a preferred embodiment of the invention, however, the fourth lens material is germanium. Germanium is known for its high refractive index and excellent infrared transmission in the infrared range.

According to the invention, however, the lens arrangement includes a fifth lens comprising the first lens material, the fifth lens being negative and arranged on the optical axis between the second lens and the third lens. This additional fifth lens helps in further correcting optical aberrations and enhancing image quality.

In general, the fourth and fifth lenses can be formed in different ways. According to a further preferred embodiment of the invention, however, the fourth lens is spherical and convex-concave, and the fifth lens is aspherical. This combination of lens shapes optimizes the balance between aberration correction and focusing capability. In this context it is preferred, that the fifth lens is aspherical and convex-concave. The specific shape of the fifth lens contributes to the overall reduction of optical aberrations and thus improves image quality.

According to a further preferred embodiment of the invention, diameters of the lenses decrease monotonically from the first lens to the third lens, such that the lenses can be arranged directly adjacent to each other. One advantage of this arrangement is that the lenses can be housed in a single cell configuration, enhancing the compactness of the lens system.

In principle, the lenses can be housed together with the detector in a common housing. According to a preferred embodiment of the invention, however, the lens arrangement further comprises a housing, wherein the lenses are arranged in the housing in a single cell configuration, and the housing comprises aluminum. Aluminum is chosen for its lightweight, thermal conductivity, manufacturability and stability. One advantage of enclosing the lenses in a single cell configuration in the housing is that it eases the assembly and contributes to the compactness.

It is possible to manufacture the lenses in different ways. According to a preferred embodiment of the invention, however, the lenses are manufactured with an accuracy of ± 50 µm thickness, 0.05 - 0.3% radii variation, and 100 nm root mean square irregularity. This precision in manufacturing ensures that the lenses meet optical performance criteria.

In general, the lenses can be assembled with different accuracies. According to a preferred embodiment of the invention, the lens arrangement is assembled with ± 20 - 100 µm accuracy in spacing and centering, and 1-2' accuracy in tilt. This assembly accuracy ensures that the overall optical alignment and performance criteria of the lens arrangement are met.

According to a further preferred embodiment of the invention, each lens comprises a flat reference surface on a side opposite the entrance side of the infrared light of each respective lens. The reference surface is therefore formed on a part of the back surface of the respective lens and thus also on the so-called back of the lens. This design feature allows for accurate manufacturing and alignment of the lenses, improving the overall optical performance without additional effort.

In another preferred embodiment of the invention, the thickness at outer edges of the respective lenses is at least 4 mm. This increased outer edge thickness facilitates lens handling and provides sufficient contact surface for bonding, thereby easing lens manipulation and ensuring ruggedization. For this purpose, the lens diameter itself can be increased and the lens can be thickened towards the outer edge. The outer edge of the respective lens does not contribute to the optics itself but enables a much better lens handling.

The invention further relates to an imaging device with the lens arrangement as described above, and with a detector, wherein the detector is arranged on the optical axis on a side of the third lens facing away from the second lens, and the detector is configured for acquiring light in the mid-wave and long-wave infrared range. Thus, the infrared light enters the lens arrangement through the aperture stop or the first lens and leaves the lens arrangement through the third lens to enter the detector of the imaging device.

According to a further preferred embodiment of the invention, the imaging device comprises a housing, wherein the lens arrangement and the detector are arranged in the housing, and the housing has an opening on a side opposite to the detector, such that the light in the infrared range can enter the lens arrangement. In this context, according to a further preferred embodiment of the invention, it is provided that the housing of the imaging device is made of aluminum. This choice of material provides passive athermalization, ensuring that the image quality remains stable across a range of temperatures.

In principle, the lenses can also be arranged separately from each other in the housing. According to a preferred embodiment of the invention, however, the housing encloses the lens arrangement in a single cell configuration. This configuration enhances the compactness and thermal stability of the imaging device.

In another preferred embodiment of the invention, the imaging device additionally comprises a filter having a filter material arranged between the detector and the lens arrangement such that light in the infrared range is filtered, and the filter material comprises germanium or sapphire. This filter ensures that only the desired wavelengths of light in the infrared range reach the detector, improving image quality.

Pursuant to a particularly preferred further development of the invention, the imaging device further comprises a multitude of filters and a shutter unit, wherein the shutter unit is configured for alternately arranging the respective filter of the multitude of filters on the optical axis, wherein the filters differ in thicknesses and/or filter materials. This allows for multispectral push-broom imaging.

In general, the detector can be designed in different ways. According to a preferred embodiment of the invention, however, the detector of the imaging device comprises a detector window and a detector plane. This design ensures that the detector is well-protected and capable of accurately capturing the infrared light focused by the lens arrangement.

According to a further preferred embodiment of the invention, the detector comprises 1024x768 pixels, and the pixels are spaced from each other at a distance of between 10 µm and 20 µm, preferably at a distance of between 12 µm and 17 µm. This high-resolution detector ensures detailed and accurate infrared imaging. In another embodiment, the detector comprises 1280x1024 pixels. This detector therefore offers a small pixel pitch.

In the following, the invention is described in further detail with reference to the drawing by means of a preferred embodiment of the invention.

In the drawing:

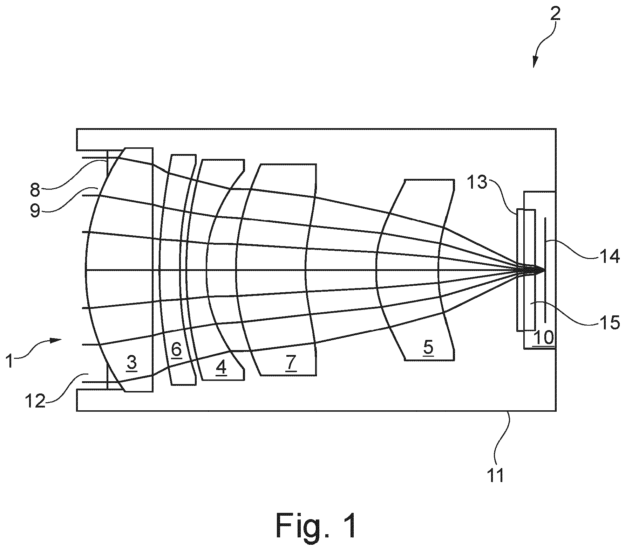

- Fig. 1: schematically depicts an imaging device with a lens arrangement according to a preferred embodiment of the invention.

Fig. 1 shows a dual-band infrared imaging device 2 with a lens arrangement 1 for infrared imaging in the mid-wave infrared range of 3 - 5 µm and long-wave infrared range of 8 - 13 µm. The lens arrangement is arranged in an aluminum housing 11 of the imaging device 2 and comprises five lenses.

A first lens 3 (L1) with a first lens material is positive and aspherical. The first lens material is a zinc selenide (ZnSe) with a refractive index of 2.42 - 2.40 in the mid-wave to long-wave infrared range and a thermo-optical coefficient of 61x10⁻⁶ 1/K. The thermo-optical coefficients here refer to coefficients at room temperature and a wavelength of 10,6 µm.

A second lens 4 (L2) with a second lens material is negative, spherical and convex-concave. The second lens material is a multispectral zinc sulfide (ZnS MS) with a refractive index of 2.255 - 2.161 in the mid-wave to long-wave infrared range and a thermo-optical coefficient of 54x10⁻⁶ 1/K.

A third lens 5 (L3) with a third lens material is positive and aspherical. The third lens material is a chalcogenide with 40% arsenic and 60% selenium and a refractive index of 2.8 - 2.77 in the mid-wave to long-wave infrared range and a thermo-optical coefficient of 32.7x10⁻⁶ 1/K. The first lens 3, the second lens 4 and the third lens 5 are arranged serially on an optical axis, such that the second lens 4 is arranged between the first lens 3 and the third lens 5.

A fourth lens 6 (L4) with a fourth lens material is negative, spherical and convex-concave. The fourth lens material is germanium with a refractive index of 4.03 - 4.003 in the mid-wave to long-wave infrared range and a thermo-optical coefficient of 416x10⁻⁶ 1/K. The fourth lens 6 is arranged on the optical axis between the first lens 3 and the second lens 4. A fifth lens 7 (L5) with the first lens material is negative, aspherical and arranged on the optical axis between the second lens 4 and the third lens 5. An aperture stop 8 (AS) is disposed on a side of the first lens 3 facing away from the fourth lens 6 in an opening 12 of the housing 11. The aperture stop 8 has an aperture 9 that is in direct contact with the first lens 3.

The first lens 3, the second lens 4, the third lens 5, the fourth lens 6 and the fifth lens 7 each have two surfaces. With reference to Fig. 1, each lens 3 - 7 has a back surface facing a detector 10 and a front surface facing an object whose image is to be acquired by the imaging device 2 and thus correspondingly on a side of the imaging device 2 and the respective lenses 3 - 7 facing away from the detector 10. The individual lenses 3 - 7 each have an object radius and a detector radius corresponding to the front surface and the back surface of the respective lens within the specified range given in the table below. Similarly, the individual lenses 3 - 7 each have a thickness in the center and a thickness at the edge of the lens within the ranges specified in the table below:

| | Radius (mm) | | Thickness (mm) | | Material | Diameter |
|---|---|---|---|---|---|---|
| | front | back | center | edge | | (mm) |
| AS | | | | | | 45.0965 - 49.8435 |
| L1 | 45.3402 - 50.1129 | 346.3699 - 382.8299 | 11.6176 - 12.8405 | 0.9537 - 1.0541 | ZnSe | 48.5507 - 53.6613 |
| L2 | 93.3143 - 103.1368 | 34.2436 - 37.8482 | 3.3563 - 3.7096 | 5.1362 - 5.6769 | ZnS MS | 44.7127 - 49.4193 |
| L3 | 29.3933 - 32.4874 | 46.0646 - 50.9135 | 10.6197 - 11.7376 | 13.5913 - 15.0220 | As40Se60 | 36.8448 - 40.7232 |
| L4 | 135.9410 - 150.2506 | 85.0384 - 96.0950 | 3.3515 - 37043 | 1.2761 - 1.4125 | Ge | 46.6317 - 51.5403 |
| L5 | 40.8689 - 45.1709 | 37.6316 - 41.5928 | 11.8815 - 13.1322 | 12.1185 - 13.3941 | ZnSe | 42.7937 - 47.2983 |

The aperture 9 has a diameter in the range of 45.0965 - 49.8435 mm, which corresponds to a focal length of the lens arrangement 1, such that the lens arrangement 1 has an aperture number of f/1 yielding a good signal-to-noise ratio.

The shape of the aspherical lenses 3, 5, 7 is indicated by a sagittal height Z(r) of the front surface and the back surface as a function of a radial distance r from the optical axis, i.e. the center of the respective lens 3, 5, 7: $Z \left(r\right) = \frac{{Cr}^{2}}{1 + \sqrt{1 - \left(1+K\right) {C}^{2} {r}^{2}}} + {A}_{4} {r}^{4} + {A}_{6} {r}^{6} + {A}_{8} {r}^{8} + {A}_{10} {r}^{10} ,$ wherein
C is the radius of curvature of the surface at an apex/vertex of the respective lens 3, 5, 7 defined as C=1/R, with R being the radius of the respective surface from the table above. K is the conical coefficient that determines the shape of the base of the respective lens 3, 5, 7, and *A*₄, *A*₆, *A*₈, and *A*₁₀ are the aspherical coefficients that describe the higher orders of deviations from a spherical shape. Each of the surfaces of the aspherical lenses 3, 5, 7 has a conic coefficient within the respective range and four aspheric coefficients within the respective ranges as depicted in the table below:

| Surface | *K* | *A*₄ | *A*₆ | *A*₈ | *A*₁₀ |
|---|---|---|---|---|---|
| L1 front | -1.0379 - - 0.9763 | -4.6194x10⁻⁸--4.1795x10⁻⁸ | -1.9120x10⁻⁹--1.7299x10⁻⁹ | 1.0749x10⁻¹² - 1.1880x10¹² | -3.5656x10⁻¹⁵--3.2261x10⁻¹⁵ |
| L1 back | 2.4640 - 2.5917 | -3 .7151x10⁻⁶--3.3624x10⁻⁶ | 4.3716x10⁻⁹ - 4.8318x10⁻⁹ | -5.7650x10⁻¹² - -5.2174x10⁻¹² | 1.0454x10⁻¹⁵ - 1.1556x10⁻¹⁵ |
| L3 front | -0.5061 - - 0.4579 | -7.9177x10⁻⁷--7.1636x10⁻⁷ | -1.1927x10⁻⁸ - -1.0789x10⁻⁸ | -1.6058x10⁻¹¹ - -1.4529x10⁻¹¹ | -6.1709x10⁻¹⁴ - -5.5833x10⁻¹⁴ |
| L3 back | 0.7786 - 0.8606 | 9.0904x10⁻⁶ - 1.0049x10⁻⁵ | -2.4804x10⁻⁸ - -2.2442x10⁻⁸ | -2.2798x10⁻¹⁰ - -2.0628x10⁻¹⁰ | 3.6667x10⁻¹³ - 4.0527x10⁻¹³ |
| L5 front | 0.3988 - 0.4387 | -1.9820x10⁻⁵ - -1.7952x10⁻⁵ | 1.1370x10⁻⁸ - 1.2568x10⁻⁸ | 2.7263x10⁻¹¹ - 3.0133x10⁻¹¹ | -2.7240x10⁻¹⁴ - -2.4646x10⁻¹⁴ |
| L5 back | 0.4477 - 0.4949 | -4.0454x10⁻⁵ - -3.6601x10⁻⁵ | 4.8375x10⁻⁸ - 5.3466x10⁻⁸ | -5.2847x10⁻¹¹ - -4.7815x10⁻¹¹ | 3.1603x10⁻¹⁴ - 3.4929x10⁻¹⁴ |

With the first to fifth lens 3 - 7 according to the above specifications, a very high achromatization is achieved in both spectral bands, whereby a high image quality is achieved with the lens arrangement 1 according to the invention. In addition, the first to fifth lenses 3 - 7 have an anti-reflective coating, which prevents ghosting. Each lens 3 - 7 comprises a flat reference surface on the back surface of each respective lens 3 - 7. The thickness at the edges of the respective lenses 3 - 7 eases lens manipulation and allowing enough contact surface for bonding.

Furthermore, the first to fourth lens materials with their thermo-optical coefficients also provide a high intrinsic thermal robustness. This ensures that the image quality is maintained over a wide temperature range. In addition, the first to fifth lenses 3 - 7 are formed in such a way that their diameters decrease monotonically. Thus, the lenses are arranged in a single cell configuration in the housing 11, whereby the thermal robustness is further increased, such that the lens arrangement 1 and imaging device 2 according to the invention are capable of constant optical performance in a range from -10 to 50°C due to this passive athermalization. At the same time, the single cell configuration enables a compact design. The housing 11 has a diameter of 50.6 mm and a length of 81 mm.

Due to the shape of the first to fifth lenses 3 - 7 and their arrangement and the first to fourth lens material, the lens assembly 1 is desensitized to manufacturing inaccuracies, which improves the manufacturability of the lens assembly 1. As a result, the lens arrangement 1 and the imaging device 2 can be manufactured in large quantities. Therefore, the first to fifth lenses 3 - 7 are manufactured with an accuracy of ± 50 µm in thickness, 0.05 - 0.3% in radii variation, and 100 nm root mean square irregularity. The lens arrangement 1 is assembled with ± 20 - 100 µm accuracy in spacing and centering, and 1-2' accuracy in tilt.

A germanium filter 13 with a thickness of 1 mm and a diameter of 13 mm is arranged between the detector 10 and the third lens 5. The detector 10 is formed with a detector window 15 having a thickness of 2 mm and a diameter of 13 mm and with pixels arranged in a detector plane 14 having a format of 1024x768 and a pixel pitch of 17 µm. The detector plane 14 is arranged on a wall of the housing 11 opposite the opening 12 and has a thickness of 1.9 mm. The lens arrangement 1 is located at a distance of 11 mm from the detector 10.

The lens arrangement 1 according to the invention in conjunction with the imaging device 2 according to the invention enables an optical performance with a modulation transfer function at the Nyquist frequency of 40 - 60% over the entire long-wave infrared range. In the mid-wave infrared range, the fraction of the total light from the object that falls within the squared detector pixel, the ensquared energy, is 70% in the worst case/field. Focused ghosts have been eliminated and a distortion over the field is smaller than 0,3%.

### Reference symbol list

- 1: lens arrangement
- 2: imaging device
- 3: first lens
- 4: second lens
- 5: third lens
- 6: fourth lens
- 7: fifth lens
- 8: aperture stop
- 9: aperture
- 10: detector
- 11: housing
- 12: opening
- 13: filter
- 14: detector plane
- 15: detector window

## Claims

1. Lens arrangement (1) for an imaging device (2), with at least three lenses, wherein
a first lens (3) is positive and comprises a first lens material with a thermo-optical coefficient of at most 70x10⁻⁶ 1/K,
a second lens (4) is negative and comprises a second lens material with a thermo-optical coefficient of 54x10⁻⁶ 1/K,
a third lens (5) is positive and comprises a third lens material with a thermo-optical coefficient of at most 40x10⁻⁶ 1/K,
a fourth lens (6) being negative comprising a fourth lens material with a thermo-optical coefficient of 416x10-6 1/K, and
a fifth lens (7) being negative and comprising the first lens material, wherein
the first lens (3), the second lens (4) and the third lens (5) are arranged serially on an optical axis, such that the second lens (4) is arranged between the first lens (3) and the third lens (5), the fourth lens (6) is arranged on the optical axis between the first lens (3) and the second lens (4), and the fifth lens (7) is arranged on the optical axis between the second lens (4) and the third lens (5),
the first lens material, the second lens material, the third lens material and the fourth lens material each being transmissive to light in the mid-wave and long-wave infrared range, and
a refractive index of the first lens material and a refractive index of the second lens material are lower than a refractive index of the third lens material in that infrared range, and the fourth lens material has a refractive index higher than the refractive index of the third lens material in the infrared range.

2. Lens arrangement (1) according to claim 1 with an aperture stop (8), wherein the aperture stop (8) is arranged on the optical axis on the side of the first lens (3) facing away from the second lens (4), wherein
an aperture (9) is formed centrally in the aperture stop (8), and
a diameter of the aperture (9) corresponds to at least a focal length of the lens arrangement (1), particularly corresponds to the focal length of the lens arrangement (1).

3. Lens arrangement (1) according to one of the claims 1 or 2, wherein the first lens (3) and the third lens (5) are aspherical, and the second lens (4) is spherical and convex-concave.

4. Lens arrangement (1) according to any one of the previous claims, wherein the first lens material is zinc selenide, the second lens material is zinc selenide or multispectral zinc sulfide, and the third lens material is a chalcogenide.

5. Lens arrangement (1) according to any one of claims 1 to 4, wherein the chalcogenide consists of 40% arsenic and 60% selenium.

6. Lens arrangement (1) according to the previous claim, wherein the fourth lens material is germanium.

7. Lens arrangement (1) according to any one of the claims 1 to 6, wherein the fourth lens (6) is spherical and convex-concave, and the fifth lens (7) is aspherical.

8. Lens arrangement (1) according to any one of the preceding claims, wherein diameters of the lenses decrease monotonically from the first lens (3) to the third lens (5), such that the lenses can be arranged directly adjacent to each other.

9. Imaging device (2) with the lens arrangement (1) according to any one of the preceding claims, and with a detector (10), wherein the detector (10) is arranged on the optical axis on a side of the third lens (5) facing away from the second lens (4), and
the detector (10) is configured for acquiring light in the mid-wave and the long-wave infrared range.

10. Imaging device (2) according to claim 9 with a housing (11), wherein the lens arrangement (1) and the detector (10) are arranged in the housing (11), and the housing (11) has an opening (12) on a side opposite to the detector (10), such that the light in the infrared range can enter the lens arrangement (1).

11. Imaging device (2) according to any one of the claims 9 or 10 with a filter (13) having a filter material arranged between the detector (10) and the lens arrangement (1) such that light in the infrared range is filtered, and the filter material comprises germanium or sapphire.

12. Imaging device (2) according to the preceding claim with a multitude of filters (13) and a shutter unit, wherein the shutter unit is configured for alternately arranging the respective filter (13) of the multitude of filters (13) on the optical axis, wherein the filters (13) differ in thicknesses and/or filter materials.

## Patentansprüche

1. Linsenanordnung (1) für eine Abbildungsvorrichtung (2) mit mindestens drei Linsen, wobei
eine erste Linse (3) positiv ist und ein erstes Linsenmaterial mit einem thermooptischen Koeffizienten von höchstens 70×10⁻⁶ 1/K aufweist,
eine zweite Linse (4) negativ ist und ein zweites Linsenmaterial mit einem thermooptischen Koeffizienten von 54×10⁻⁶ 1/K aufweist,
eine dritte Linse (5) positiv ist und ein drittes Linsenmaterial mit einem thermooptischen Koeffizienten von höchstens 40×10⁻⁶ 1/K aufweist,
eine vierte Linse (6) negativ ist und ein viertes Linsenmaterial mit einem thermooptischen Koeffizienten von 416×10⁻⁶ 1/K aufweist, und
eine fünfte Linse (7) negativ ist und das erste Linsenmaterial aufweist, wobei
die erste Linse (3), die zweite Linse (4) und die dritte Linse (5) in Reihe auf einer optischen Achse angeordnet sind, derart, dass die zweite Linse (4) zwischen der ersten Linse (3) und der dritten Linse (5) angeordnet ist, die vierte Linse (6) auf der optischen Achse zwischen der ersten Linse (3) und der zweiten Linse (4) angeordnet ist und die fünfte Linse (7) auf der optischen Achse zwischen der zweiten Linse (4) und der dritten Linse (5) angeordnet ist,
das erste Linsenmaterial, das zweite Linsenmaterial, das dritte Linsenmaterial und das vierte Linsenmaterial jeweils für Licht im mittel- und langwelligen Infrarotbereich durchlässig sind, und
ein Brechungsindex des ersten Linsenmaterials und ein Brechungsindex des zweiten Linsenmaterials in diesem Infrarotbereich niedriger sind als ein Brechungsindex des dritten Linsenmaterials, und das vierte Linsenmaterial in diesem Infrarotbereich einen Brechungsindex aufweist, der höher ist als der Brechungsindex des dritten Linsenmaterials.

2. Linsenanordnung (1) nach Anspruch 1 mit einer Aperturblende (8), wobei die Aperturblende (8) auf der optischen Achse auf der der zweiten Linse (4) abgewandten Seite der ersten Linse (3) angeordnet ist,
wobei in der Aperturblende (8) mittig eine Öffnung (9) ausgebildet ist, und
ein Durchmesser der Öffnung (9) mindestens einer Brennweite der Linsenanordnung (1) entspricht, insbesondere der Brennweite der Linsenanordnung (1) entspricht.

3. Linsenanordnung (1) nach Anspruch 1 oder 2, wobei die erste Linse (3) und die dritte Linse (5) asphärisch sind und die zweite Linse (4) sphärisch und konvex-konkav ist.

4. Linsenanordnung (1) nach einem der vorhergehenden Ansprüche, wobei das Material der ersten Linse Zinkselenid ist, das Material der zweiten Linse Zinkselenid oder multispektrales Zinksulfid ist und das Material der dritten Linse ein Chalkogenid ist.

5. Linsenanordnung (1) nach einem der Ansprüche 1 bis 4, wobei das Chalkogenid aus 40% Arsen und 60% Selen besteht.

6. Linsenanordnung (1) nach dem vorhergehenden Anspruch, wobei das vierte Linsenmaterial Germanium ist.

7. Linsenanordnung (1) nach einem der Ansprüche 1 bis 6, wobei die vierte Linse (6) sphärisch und konvex-konkav ist und die fünfte Linse (7) asphärisch ist.

8. Linsenanordnung (1) nach einem der vorhergehenden Ansprüche, wobei die Durchmesser der Linsen von der ersten Linse (3) zur dritten Linse (5) monoton abnehmen, so dass die Linsen direkt benachbart zueinander angeordnet werden können.

9. Abbildungsvorrichtung (2) mit der Linsenanordnung (1) nach einem der vorhergehenden Ansprüche und mit einem Detektor (10), wobei
der Detektor (10) auf der optischen Achse auf einer der zweiten Linse (4) abgewandten Seite der dritten Linse (5) angeordnet ist, und
der Detektor (10) zum Erfassen von Licht im mittelwelligen und langwelligen Infrarotbereich konfiguriert ist.

10. Abbildungsvorrichtung (2) nach Anspruch 9 mit einem Gehäuse (11), wobei die Linsenanordnung (1) und der Detektor (10) im Gehäuse (11) angeordnet sind und das Gehäuse (11) eine Öffnung (12) auf einer dem Detektor (10) gegenüberliegenden Seite aufweist, so dass das Licht im Infrarotbereich in die Linsenanordnung (1) eintreten kann.

11. Abbildungsvorrichtung (2) nach Anspruch 9 oder 10 mit einem Filter (13), der ein Filtermaterial aufweist, das zwischen dem Detektor (10) und der Linsenanordnung (1) derart angeordnet ist, dass Licht im Infrarotbereich gefiltert wird, und wobei das Filtermaterial Germanium oder Saphir aufweist.

12. Abbildungsvorrichtung (2) nach einem der vorhergehenden Ansprüche mit einer Vielzahl von Filtern (13) und einer Shuttereinheit, wobei die Shuttereinheit dafür konfiguriert ist, jeweils einen der Filter (13) der Vielzahl von Filtern (13) abwechselnd auf der optischen Achse anzuordnen, wobei sich die Filter in ihrer Dicke und/oder ihrem Filtermaterial unterscheiden.

## Revendications

1. Agencement de lentilles (1) destiné à un dispositif d'imagerie (2), avec au moins trois lentilles, dans lequel
une première lentille (3) est positive et comprend un premier matériau de lentille avec un coefficient thermo-optique d'au maximum 70 x 10⁻⁶ 1/K,
une deuxième lentille (4) est négative et comprend un deuxième matériau de lentille avec un coefficient thermo-optique de 54 x 10⁻⁶ 1/K,
une troisième lentille (5) est positive et comprend un troisième matériau de lentille avec un coefficient thermo-optique d'au maximum 40 x 10⁻⁶ 1/K,
une quatrième lentille (6) qui est négative et comprend un quatrième matériau de lentille avec un coefficient thermo-optique de 416 x 10⁻⁶ 1/K, et
une cinquième lentille (7) qui est négative et comprend le premier matériau de lentille, dans lequel
la première lentille (3), la deuxième lentille (4) et la troisième lentille (5) sont agencées en série sur un axe optique, de telle sorte que la deuxième lentille (4) est agencée entre la première lentille (3) et la troisième lentille (5), la quatrième lentille (6) est agencée sur l'axe optique entre la première lentille (3) et la deuxième lentille (4), et la cinquième lentille (7) est agencée sur l'axe optique entre la deuxième lentille (4) la troisième lentille (5),
le premier matériau de lentille, le deuxième matériau de lentille, le troisième matériau de lentille et le quatrième matériau de lentille, chacun étant transmissif vis-à-vis de la lumière dans la plage des infrarouges de longueur d'onde moyenne et longue, et
un indice de réfraction du premier matériau de lentille et un indice de réfraction du deuxième matériau de lentille sont inférieurs à un indice de réfraction du troisième matériau de lentille dans ladite plage des infrarouges, et le quatrième matériau de lentille a un indice de réfraction supérieur à l'indice de réfraction du troisième matériau de lentille dans la plage des infrarouges.

2. Agencement de lentilles (1) selon la revendication 1 avec une butée d'ouverture (8), dans lequel la butée d'ouverture (8) est agencée sur l'axe optique sur le côté de la première lentille (3) faisant face à la direction opposée à la deuxième lentille (4), dans lequel
une ouverture (9) est formée de manière centrale dans la butée d'ouverture (8), et
un diamètre de l'ouverture (9) correspond à au moins une distance focale de l'agencement de lentilles (1), en particulier correspond à la distance focale de l'agencement de lentilles (1).

3. Agencement de lentilles (1) selon l'une des revendications 1 ou 2, dans lequel la première lentille (3) et la troisième lentille (5) sont asphériques, et la deuxième lentille (4) est sphérique et convexe-concave.

4. Agencement de lentilles (1) selon l'une quelconque des revendications précédentes, dans lequel le premier matériau de lentilles est le séléniure de zinc, le deuxième matériau de lentilles est le séléniure de zinc ou le sulfure de zinc multispectral, et le troisième matériel de lentille est un chalcogénure.

5. Agencement de lentilles (1) selon l'une quelconque des revendications 1 à 4, dans lequel le chalcogénure est constitué de 40 % d'arsenic et de 60 % de sélénium.

6. Agencement de lentilles (1) selon la revendication précédente, dans lequel le quatrième matériau de lentille est le germanium.

7. Agencement de lentilles (1) selon l'une quelconque des revendications 1 à 6, dans lequel la quatrième lentille (6) est sphérique et convexe-concave, et la cinquième lentille (7) est asphérique.

8. Agencement de lentilles (1) selon l'une quelconque des revendications précédentes, dans lequel les diamètres des lentilles diminuent de manière monotone depuis la première lentille (3) jusqu'à la troisième lentille (5), de telle sorte que les lentilles peuvent être agencées de manière directement adjacente les unes aux autres.

9. Dispositif d'imagerie (2) avec l'agencement de lentilles (1) selon l'une quelconque des revendications précédentes, et avec un détecteur (10), dans lequel le détecteur (10) est agencé sur l'axe optique sur un côté de la troisième lentille (5) faisant face à la direction opposée à la deuxième lentille (4), et
le détecteur (10) est configuré pour acquérir de la lumière dans la plage des infrarouges de longueur d'onde moyenne et longue.

10. Dispositif d'imagerie (2) selon la revendication 9 avec un boîtier (11), dans lequel l'agencement de lentilles (1) et le détecteur (10) sont agencés dans le boîtier (11), et le boîtier (11) a une ouverture (12) sur un côté opposé au détecteur (10), de telle sorte que la lumière dans la plage des infrarouges peut entrer dans l'agencement de lentilles (1).

11. Dispositif d'imagerie (2) selon l'une quelconque des revendications 9 ou 10 avec un filtre (13) ayant un matériau de filtre agencé entre le détecteur (10) et l'agencement de lentilles (1) de telle sorte que la lumière dans la plage des infrarouges est filtrée, et le matériau de filtre comprend du germanium ou du saphir.

12. Dispositif d'imagerie (2) selon la revendication précédente avec une multitude de filtres (13) et une unité d'obturateur, dans lequel l'unité d'obturateur est configurée pour agencer en alternance le filtre (13) respectif de la multitude de filtres (13) sur l'axe optique, dans lequel les filtres (13) diffèrent de par leur épaisseur et/ou leurs matériaux de filtre.
